# EUROPÄISCHE PATENTSCHRIFT

(11) **EP 3 241 448 B1**
(45) Veröffentlichungstag und Bekanntmachung des Hinweises auf die Patenterteilung: **06.06.2018**
(21) Anmeldenummer: 17163553.5
(22) Anmeldetag: 29.03.2017
(51) Int. Cl.: A22C 13/02

(54) **TRAGORGAN MIT INTEGRIERTER ABRUTSCHSICHERUNG**
SUSPENSION MEANS WITH INTEGRATED SLIP PROTECTION
ORGANE SUPPORT COMPRENANT UNE SÉCURITÉ ANTIDÉRAPANTE INTÉGRÉE

(30) Priorität: 18.04.2016 DE 102016107145
(43) Veröffentlichungstag der Anmeldung: 08.11.2017
(73) Patentinhaber: CDS Hackner GmbH, 74564 Crailsheim (DE)
(72) Erfinder: Hackner, Michael, 74592 Kirchberg/Jagst (DE)
(74) Vertreter: DREISS Patentanwälte PartG mbB

(56) Entgegenhaltungen:
- DE-B- 1 265 614
- DE-T2- 69 708 156
- FR-A1- 2 775 873

## Beschreibung

Die Erfindung betrifft ein Tragorgan zum Aufschieben und Haltern wenigstens eines Darmabschnitts, wobei das Tragorgan einen ersten und einen zweiten freien Endbereich aufweist, wobei wenigstens ein freier Endbereich des Tragorgans zur Verhinderung des Abrutschens eines auf das Tragorgan aufgeschobenen Darmabschnitts von dem Tragorgan einen um eine erste Faltkante faltbaren Faltabschnitt aufweist. Die Erfindung betrifft auch ein dazugehöriges Verfahren.

Um Würste herzustellen, die insbesondere eine Naturdarmhülle aufweisen, werden in Darmsortierbetrieben oder in vergleichbaren Betrieben die den Tieren entnommenen Därme nach Art und Größe sortiert auf insbesondere stab- oder rohrförmige Tragorgane aufgeschoben. Die Darmabschnitte werden dabei regelmäßig in Ziehharmonikafalten auf die Tragorgane aufgeschoben. In diesem aufgeschobenen Zustand werden die Därme dann zu den Wurstherstellern geliefert. Dort werden die Därme von den Tragorganen gelöst und mit der jeweils gewünschten Füllmasse befüllt.

Das Tragorgan dient dabei einerseits als Transporthilfe, um die Darmabschnitte zu Metzgereien oder sonstigen Wurstherstellern zu transportieren. Andererseits dient das Tragorgan auch dazu, die Darmabschnitte auf das Füllrohr einer Wurstfüllmaschine zu bringen, wo die Darmabschnitte durch das Füllrohr hindurch mit Wurst oder anderen Füllmassen befüllt werden. Nach dem Aufbringen auf das Füllrohr wird das Tragorgan regelmäßig ohne die Darmabschnitte wieder vom Füllrohr entfernt.

Um ein Abgleiten der Darmabschnitte von den Tragorganen zu verhindern, ist es üblich, und beispielsweise aus der DE 103 14 455 B4 vorbekannt, ein Halteteil in Form einer gelochten Scheibe auf das vordere Ende des Tragorgan aufzuschieben. Dabei besteht die Gefahr, dass diese Halteteile durch Unachtsamkeit oder technische Fehler in die Wurstprodukte geraten. Außerdem ist es vergleichsweise aufwendig, an jedem mit einem Darmabschnitt beladenen Tragorgan Gummiringe vorzusehen.

Aus der DE 1 265 614 Druckschrift ist ein zweiteiliges Tragorgan bekannt. Es umfasst einen sehr dünnwandigen und daher nicht eigenstabilen Schlauch (erstes Bauteil), der an einem Ende so beschnitten wird, dass sich zwei Zungen bilden. Dieser labile Schlauch wird durch einen Versteifungsstreifen (zweites Bauteil) ausgesteift, der ins Innere des Schlauchs geschoben wird.

Aus der DE 697 08 156 T2 und der FR 2 775 873 sind Tragorgane bekannt, die aus einem abgeflachten und über seine gesamte Länge geschlitzten Schlauch bestehen. Gemäß einem Ausführungsbeispiel der DE 697 08 156 T2 wird in den flachen Schlitzschlauch eine Kerbe eingebracht. Dadurch entsteht ein Randabschnitt der entlang einer durch die Kerbe definierte Biegelinie umgeschlagen wird.

Die vorliegende Erfindung hat die Aufgabe, Abhilfe für die Nachteile des Standes der Technik zu schaffen.

Diese Aufgabe wird durch ein Tragorgan mit den Merkmalen des Anspruchs 1 gelöst. Es ist folglich vorgesehen, dass das Tragorgan rohrförmig ausgebildet ist, dass wenigstens ein freier Endbereich zur Ausbildung zweier zungenartiger, jeweils einen Faltabschnitt aufweisender Randabschnitte aufgeschlitzt ist, dass beide zungenartigen Randabschnitte eines Faltabschnitts eine sich schräg oder quer zur Längsachse entlang einer der beiden flachen Seiten erstreckende Faltkante aufweist. Das Schlitzen eines Rohres ist auf besonders einfache Art und Weise automatisiert möglich, beispielsweise durch Abscheren. Dabei kann sich die erste Faltkante quer zur Längsachse verlaufend entlang eines Umfangsabschnitts erstrecken.

Um einen Darmabschnitt auf einem Tragorgan zu sichern, ist es folglich nicht mehr nötig, einen Gummiring vorzusehen. Stattdessen kann durch einfaches Umfalten eines Faltabschnitts um eine Faltkante eine Abrutschsicherung bereitgestellt werden.

Das Tragorgan kann dabei insbesondere einstückig ausgebildet sein und aus elastisch nachgiebigem Kunststoff bestehen oder einen solchen umfassen.

Das erfindungsgemäße Tragorgan erstreckt sich entlang einer Längsachse, wobei die erste Faltkante schräg oder quer, also in einem Winkel von im Wesentlichen 90°, zur Längsachse verläuft. Dabei ist das Tragorgan als Rohr mit einem ovalen oder runden Querschnitt ausgebildet. Als besonders geeignet haben sich jedoch Flachrohre mit zwei im Wesentlichen flachen und nahezu parallel zueinander verlaufenden Seiten herausgestellt, da diese mit darauf angeordneten Darmabschnitten besonders kompakt lagerbar sind. Denkbar ist auch, dass das Tragorgan rohrförmig ausgebildet ist und von einem runden Querschnitt in einen Flachrohrquerschnitt überführbar ist, beispielsweise mechanisch oder durch evakuieren.

Als besonders vorteilhaft hat es sich herausgestellt, wenn der Faltabschnitt entlang einer parallel zur Längsachse durch den Faltabschnitt hindurch verlaufenden zweiten Faltkante faltbar ist. Diese zweite Faltkante kann dabei insbesondere eine Symmetrielinie bilden, sodass der Faltabschnitt nach dem Falten um die zweite Faltkante zwei spiegelsymmetrische Unterabschnitte aufweist. Durch diese dachförmige Aussteifung kann in besonders vorteilhafter Weise verhindert werden, dass sich der Faltabschnitt wieder auffaltet. Dies insbesondere, wenn das Tragorgan im Betrieb, insbesondere beim Transport oder der Lagerung, gedrückt bzw. gequetscht wird. Wenn es sich bei dem Tragorgan um ein Flachrohr handelt, kann, wenn das Rohr aufgedrückt (Drücken quer zu den flachen Seiten) oder gequetscht (Zusammendrücken der flachen Seiten) wird, ein Auffalten in die Ursprungslage verhindert werden.

Als besonders vorteilhaft hat es sich herausgestellt, wenn das Tragorgan flachrohrartig mit zwei im Wesentlichen parallel zueinander verlaufenden und im Wesentlichen flachen Seiten ausgebildet ist oder in eine solche Form überführbar ist, wobei sich die jeweilige Faltkante quer zur Längsachse entlang einer der beiden flachen Seiten erstreckt. Hierdurch ist ein Falten des Faltabschnitts auf besonders einfache Art und Weise möglich. Außerdem wird die Neigung des Faltabschnitts, wieder seine ungefaltete Ursprungslage einzunehmen (Auffalten) reduziert.

Dabei kann sich der Faltabschnitt zu seinem freien Ende hin verjüngen. Dies hat sich insbesondere beim Aufziehen der Darmabschnitte als vorteilhaft erwiesen. Hierdurch wird nämlich die Gefahr einer Beschädigung der Darmabschnitte reduziert und das Aufziehen erleichtert.

Schließlich können insbesondere beide freien Endbereiche des Tragorgans einen erfindungsgemäßen Faltabschnitt aufweisen. Dadurch kann ein Abrutschen eines Darmabschnitts in beiden Richtungen verhindert werden.

Die Erfindung wird auch gelöst durch ein Verfahren zum Aufschieben und Haltern von zumindest einem Darmabschnitt auf ein erfindungsgemäßes Tragorgan umfassend die folgenden Schritte:
a. Aufschieben des Darmabschnitts auf das Tragorgan; und
b. Falten des Faltabschnitts um die erste Faltkante.

Hierdurch kann ein Aufschieben und Haltern eines Darmabschnitts zum Transportieren desselben bereitgestellt werden, ohne dass zusätzliche Sicherungsmittel wie beispielsweise Gummiringe verwendet werden müssen. Selbstverständlich können jedoch zusätzliche Befestigungsmittel vorgesehen sein. Sobald der Faltabschnitt aus der Ursprungslage um die erste Faltkante gefaltet ist, kann ein Abrutschen des Darmabschnitts wirkungsvoll verhindert werden.

Dabei kann das Verfahren den weiteren Schritt Falten des Faltabschnitts entlang der zweiten Faltkante umfassen. Hierbei kann insbesondere ein unerwünschtes Auffalten des Faltabschnitts verhindert werden.

Vorzugsweise werden die Schritte a. und b. oder a. bis c. am anderen freien Endbereich wiederholt oder gleichzeitig ausgeführt, um beidseits eine Abrutschsicherung bereitzustellen.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden. Es zeigen:
- Figur 1:: Schematische Seitenansicht eines Tragorgans;
- Figur 2:: Seitenansicht eines freien Endbereichs des Tragorgans gemäß Figur 1 mit dem Faltabschnitt im ungefalteten Zustand;

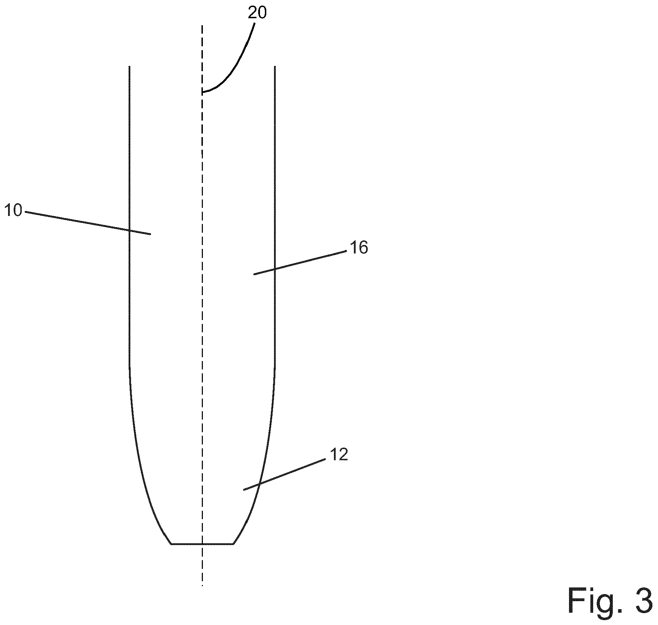

- Figur 3:: Draufsicht auf die Darstellung gemäß Figur 2;
- Figur 4:: Seitenansicht auf die Darstellung gemäß Figur 2 mit um die erste Faltkante gefaltetem Faltabschnitt;
- Figur 5:: Vorderansicht auf die Darstellung gemäß Figur 4;
- Figur 6:: Seitenansicht auf die Darstellung gemäß Figur 4 mit zusätzlich um die zweite Faltkante gefaltetem Faltabschnitt;
- Figur 7:: Vorderansicht auf die Darstellung gemäß Figur 6
- Figur 8:: Schnitt entlang der Linie VIII-VIII gemäß Figur 7 mit zusammengedrückten (Fig. 8a) bzw. aufgedrückten (Fig. 8b) Ober- und Unterseiten.

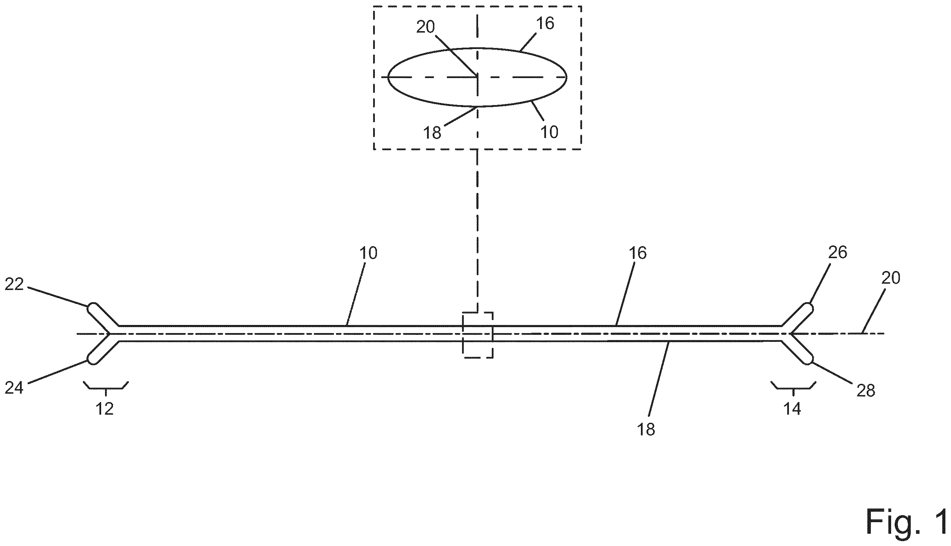

Die Figur 1 zeigt ein insgesamt mit dem Bezugszeichen 10 bezeichnetes Tragorgan mit einem ersten Endbereich 12 und einem zweiten Endbereich 14. Das Tragorgan 10 besteht aus elastischem, biegbarem, lebensmittelechtem Kunststoff und ist, wie im Querschnitt dargestellt, als sich in Längsrichtung 20 erstreckendes Flachrohr mit zwei im Wesentlichen parallel zueinander verlaufenden Seiten 16, 18 ausgebildet. Die Endbereiche 12,14 weisen jeweils zwei zungenartig sich zum freien Ende hin verjüngend ausgebildete Randabschnitte 22, 24, 26, 28 auf, die durch Anschlitzen oder Beschneiden der beiden Endbereiche 12,14 auf einfache Weise ausgebildet werden. Die Randabschnitte 22, 24, 26,28 verjüngen sich zungenartig zum freien Ende hin.

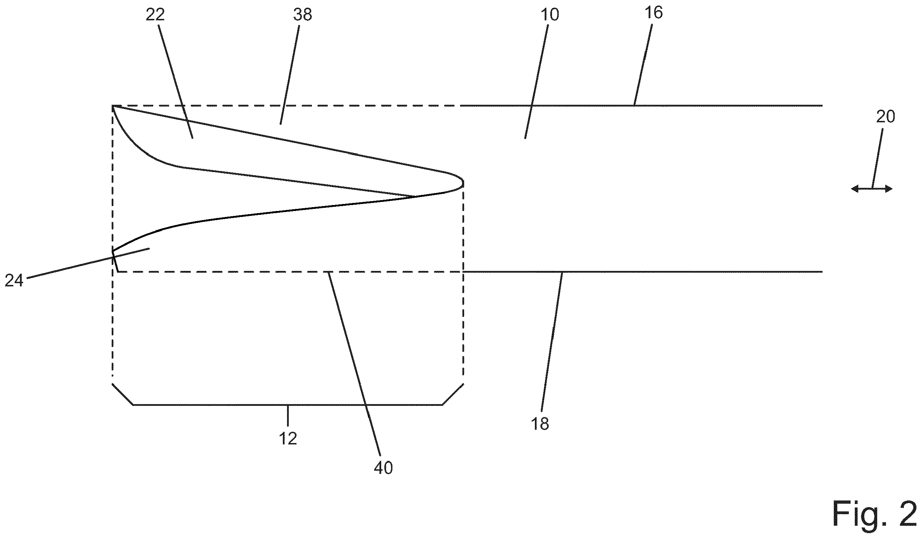

Im in Figur 2 dargestellten ungefalteten Zustand kann ein Darmabschnitt auf das Tragorgan 10 aufgebracht werden. Ein derartiger Darmabschnitt kann dabei auch mehrere überlappte oder auf andere Weise zusammengefügte Naturdarmabschnitte umfassen. Zudem können mehrere Darmabschnitte hintereinander auf das Tragorgan 10 aufgeschoben werden.

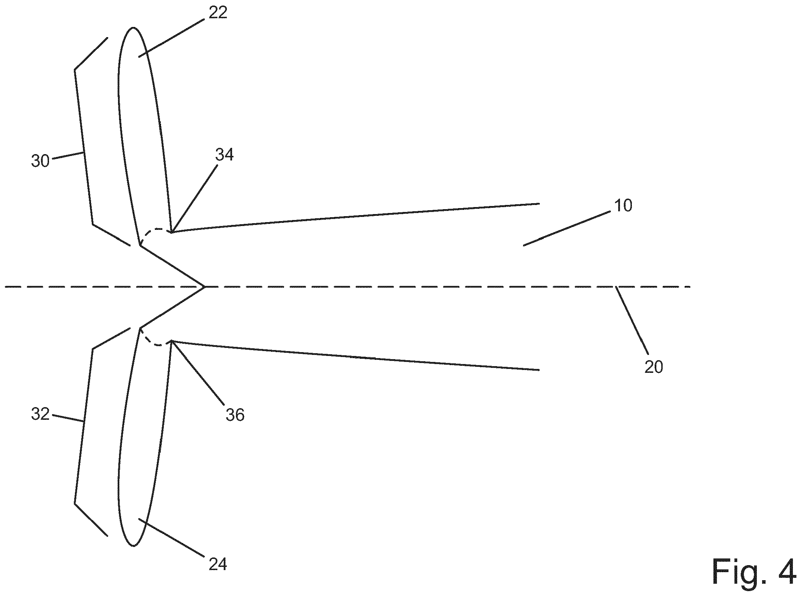

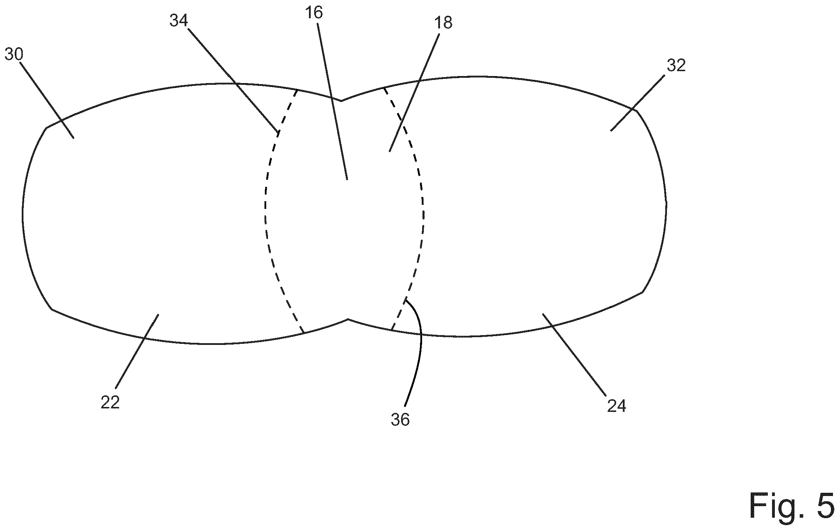

Um zu verhindern, dass ein auf das Tragorgan 10 aufgeschobener Darmabschnitt insbesondere beim Transport oder der Lagerung von dem Tragorgan 10 abrutscht, weisen die Randabschnitte 22, 24, 26, 28 jeweils einen Faltabschnitt 30,32 (für die Randabschnitte 22, 24 gezeigt) auf, wie in Figur 4 besonders deutlich zu erkennen ist. Diese Faltabschnitte 30,32 werden sodann um in den Figuren 4 und 5 deutlich zu erkennende Faltkanten 34,36 um im Wesentlichen 180° gefaltet. Die Faltkanten 34,36 verlaufen dabei quer zur Längsachse 20 des Tragorgans 10 entlang der flachen Seiten 16,18 des Tragorgans 10 durch die Randabschnitte 22, 24, 26, 28.

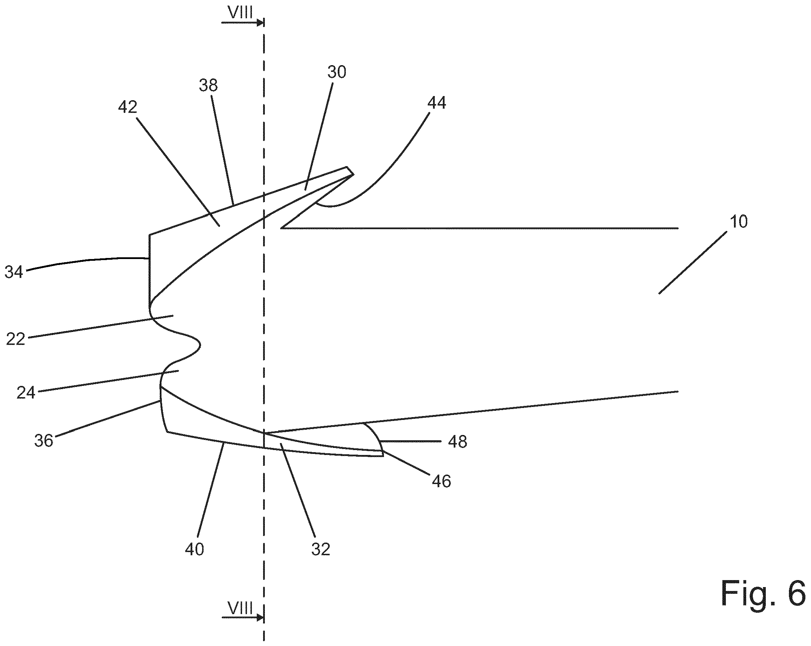

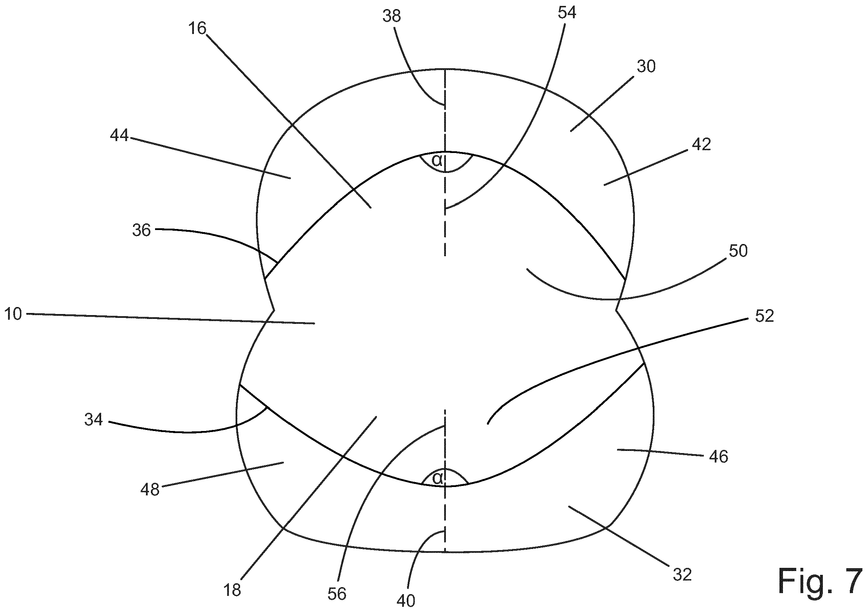

Um ein Auffalten der Faltabschnitte 30,32 in die Ursprungslage zu verhindern, weisen diese jeweils eine quer zur ersten Faltkante 34, 36 verlaufende zweite Faltkante 38, 40 auf. Die zweiten Faltkanten 38, 40 liegen dabei in einer durch die Längsachse 20 verlaufenden Ebene. Die Faltabschnitte 32,32 werden sodann entlang der zweiten Faltkante 38,40 gefaltet bzw. geknickt, wie in Figur 6 deutlich zu erkennen ist, sodass zwei spiegelsymmetrische Unterabschnitte 42, 44, 46, 48 ausgebildet werden, welche einen Winkel α einschließen (vgl. Fig. 7). Durch diese dachförmige Aussteifung kann ein Auffalten der Faltabschnitte 30, 32 wirkungsvoll verhindert werden.

Dabei werden, wie in Figur 7 besonders gut zu erkennen ist, auch die den umgefalteten Faltabschnitten 30, 32 gegenüberliegenden Abschnitte 50, 52 der flachen Seiten 16, 18 des Tragorgans 10 um parallel zu den zweiten Faltkanten 38,40 verlaufende Faltkanten 54, 56 gefaltet bzw. geknickt. Auch dies trägt zu einer weiteren Sicherung der Faltabschnitte 30, 32 gegen ein Auffalten bei.

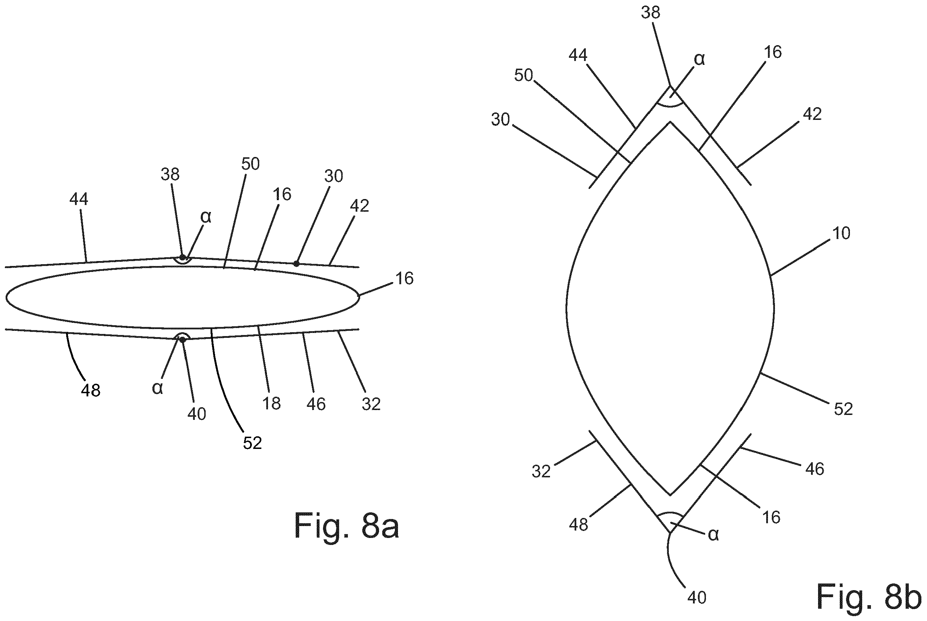

Werden die flachen Seiten 16,18, wie in Figur 8a zu erkennen ist, zusammengedrückt, so nähert sich der Winkel α 180° an. Dennoch falten sich die Faltabschnitte 30,32 nicht in die Ursprungslage zurück, weil die zum Zusammendrücken erforderliche Kraft durch die Faltabschnitte 30, 32 auf das Tragorgan 10 wirken. Das verhindert ein Auffalten.

Wird ein Druck quer zu den flachen Seiten 16,18, wie in Figur 8b gezeigt, ausgeübt, so verringert sich der Winkel α und kann deutlich unter 90° betragen, wobei auch die Abschnitte 50,52 dachförmig zusammengefaltet werden. Auch in dieser Konfiguration wird eine stabile Sicherung gegen ein Auffalten und damit ein Abrutschen eines auf dem Tragorgan 10 angeordneten Darmabschnitts bereitgestellt.

Insgesamt wird mit der Erfindung ein Tragorgan 10 bereitgestellt, welches ein Abrutschen eines oder mehrerer darauf angeordneter Darmabschnitte wirkungsvoll und auf überraschend einfache Art verhindert und zusätzliche Befestigungsmittel entbehrlich macht, selbst dann wenn das Tragorgan gedrückt oder gequetscht wird.

## Patentansprüche

1. Tragorgan (10) zum Aufschieben und Haltern wenigstens eines Darmabschnitts, wobei das Tragorgan (10) sich entlang einer Längsachse (20) erstreckt sowie einen ersten und einen zweiten freien Endbereich (12, 14) und zwei im Wesentlichen parallel zueinander verlaufenden Seiten (16, 18) aufweist, wobei wenigstens ein freier Endbereich (12, 14) des Tragorgans (10) zur Verhinderung des Abrutschens eines auf das Tragorgan (10) aufgeschobenen Darmabschnitts von dem Tragorgan (10) einen um eine erste Faltkante faltbaren Faltabschnitt (30, 32) aufweist, **dadurch gekennzeichnet, dass** das Tragorgan (10) rohrförmig ausgebildet ist, dass wenigstens ein freier Endbereich (12, 14) zur Ausbildung zweier zungenartiger, jeweils einen Faltabschnitt (30, 32) aufweisender Randabschnitte (22, 24, 26, 28) aufgeschlitzt ist, und dass beide zungenartigen Randabschnitte (22, 24, 26, 28) eines Faltabschnitts (30, 32) eine sich schräg oder quer zur Längsachse (20) entlang einer der beiden flachen Seiten (16, 18) erstreckende Faltkante (34, 36) aufweisen.

2. Tragorgan (10) nach Anspruch 1, **dadurch gekennzeichnet, dass** der Faltabschnitt (30, 32) entlang einer quer oder schräg zur ersten Faltkante (34, 36) durch den Faltabschnitt (30, 32) hindurch verlaufenden Ebene und/oder in einer durch die Längsachse (20) verlaufenden Ebene liegenden zweiten Faltkante (38, 40) faltbar ist.

3. Tragorgan (10) nach Anspruch 1 oder 2, **dadurch gekennzeichnet, dass** sich die erste Faltkante (34, 36) quer zur Längsachse (20) verlaufend entlang eines Umfangsabschnitts erstreckt.

4. Tragorgan (10) nach einem der vorhergehenden Ansprüche, **dadurch gekennzeichnet, dass** das Tragorgan (10) flachrohrartig mit zwei im Wesentlichen parallel zueinander verlaufenden flachen Seiten (16, 18) ausgebildet ist oder in eine solche Form überführbar ist, wobei sich die jeweilige Faltkante quer zur Längsachse (20) entlang einer der beiden flachen Seiten (16, 18) erstreckt.

5. Tragorgan (10) nach einem der vorhergehenden Ansprüche, **dadurch gekennzeichnet, dass** sich der Faltabschnitt (30, 32) zu seinem freien Ende hin verjüngt.

6. Tragorgan (10) nach einem der vorhergehenden Ansprüche, **dadurch gekennzeichnet, dass** beide freien Endbereiche (12, 14) einen Faltabschnitt (30, 32) aufweisen.

7. Verfahren zum Aufschieben und Haltern von zumindest einem Darmabschnitt auf ein Tragorgan (10) nach einem der vorhergehenden Ansprüche, umfassend die folgenden Schritte:
a. Aufschieben des Darmabschnitts auf das Tragorgan (10); und
b. Falten des Faltabschnitts (30, 32) um die erste Faltkante (34, 36).

8. Verfahren zum Aufschieben und Haltern von zumindest einem Darmabschnitt nach Anspruch 7 auf ein Tragorgan (10) nach einem der Ansprüche 2 bis 6, umfassend den weiteren Schritt
c. Falten des Faltabschnitts (30, 32) entlang der zweiten Faltkante (38, 40).

9. Verfahren zum Aufschieben und Haltern von zumindest einem Darmabschnitt nach Anspruch 7 oder 8 auf ein Tragorgan (10) nach Anspruch 6, **dadurch gekennzeichnet, dass** die Schritte a. und b. oder a. bis c. am anderen freien Endbereich (12, 14) wiederholt werden.

## Claims

1. Support element (10) for sliding on and holding at least one intestine portion, the support element (10) extending along a longitudinal axis (20) and comprising a first and a second free end region (12, 14) and two sides (16, 18) that extend substantially in parallel with one another, at least one free end region (12, 14) of the support element (10) comprising a folding portion (30, 32) that can be folded about a first fold edge in order to prevent an intestine portion that has been slid onto the support element (10) from slipping off said support element (10), **characterized in that** the support element (10) is tubular, **in that** at least one free end region (12, 14) is slit so as to form two tongue-like edge portions (22, 24, 26, 28) that each comprise a folding portion (30, 32), and **in that** both tongue-like edge portions (22, 24, 26, 28) of a folding portion (30, 32) comprise a fold edge (34, 36) that extends obliquely or transversely to the longitudinal axis (20) along one of the two planar sides (16, 18).

2. Support element (10) according to claim 1, **characterized in that** the folding portion (30, 32) can be folded along a second fold edge (38, 40) that lies in a plane that extends transversely or obliquely with respect to the first fold edge (34, 36) through the folding portion (30, 32) and/or that extends through the longitudinal axis (20) .

3. Support element (10) according to claim 1 or claim 2, **characterized in that** the first fold edge (34, 36) extends transversely to the longitudinal axis (20) along a peripheral portion.

4. Support element (10) according to any of the preceding claims, **characterized in that** the support element (10) is designed in the manner of a planar tube comprising two planar sides (16, 18) that extend substantially in parallel with one another or can be brought into such a shape, the relevant fold edge extending transversely to the longitudinal axis (20) along one of the two planar sides (16, 18).

5. Support element (10) according to any of the preceding claims, **characterized in that** the folding portion (30, 32) tapers towards the free end thereof.

6. Support element (10) according to any of the preceding claims, **characterized in that** both free end regions (12, 14) comprise a folding portion (30, 32).

7. Method for sliding and holding at least one intestine portion on a support element (10) according to any of the preceding claims, comprising the following steps:
a. sliding the intestine portion onto the support element (10); and
b. folding the folding portion (30, 32) about the first fold edge (34, 36).

8. Method for sliding and holding at least one intestine portion according to claim 7 on a support element (10) according to any of claims 2 to 6, comprising the additional step of:
c. folding the folding portion (30, 32) along the second fold edge (38, 40).

9. Method for sliding and holding at least one intestine portion according to claim 7 or claim 8 on a support element (10) according to claim 6, **characterized in that** steps a. and b. or a. to c. are repeated on the other free end region (12, 14).

## Revendications

1. Organe de support (10) permettant de pousser et de maintenir au moins un segment de boyau, l'organe de support (10) s'étendant le long d'un axe longitudinal (20) et comprenant une première zone d'extrémité libre et une seconde zone d'extrémité libre (12, 14) ainsi que deux côtés (16, 18) s'étendant essentiellement parallèlement, au moins l'une des zones d'extrémité libre (12, 14) de l'organe de support (10) comportant, pour empêcher l'extraction par glissement d'un segment de boyau poussé sur l'organe de support (10) de cet organe de support (10) un segment de pliage (30, 32) pouvant être replié autour d'une première ligne de pliage, **caractérisé en ce que** l'organe de support (10) est réalisé en forme de tube, au moins une zone d'extrémité libre (12, 14) est fendue pour permettre de former deux segments de bord (22, 24, 26, 28) en forme de languettes, comprenant chacun un segment de pliage (30, 32), et les deux segments de bord en forme de languettes (22, 24, 26, 28) d'un segment de pliage (30, 32) comportent une ligne de pliage (34, 36) s'étendant obliquement ou transversalement à l'axe longitudinal (20) le long de l'un des deux côtés plats (16, 18).

2. Organe de support (10) conforme à la revendication 1, **caractérisé en ce que** le segment de pliage (30, 32) peut être replié le long d'une seconde ligne de pliage (38, 40) s'étendant transversalement ou obliquement par rapport à la première ligne de pliage (34, 36) au travers du segment de pliage (30, 32), et/ou située dans un plan passant par l'axe longitudinal (20).

3. Organe de support (10) conforme à la revendication 1 ou 2, **caractérisé en ce que** la première ligne de pliage (34, 36) s'étend transversalement à l'axe longitudinal (20), le long d'un segment périphérique.

4. Organe de support (10) conforme à l'une des revendications précédentes, **caractérisé en ce qu'**il a la forme d'un tube plat avec deux côtés plats (16, 18) s'étendant essentiellement parallèlement, ou peut être mis dans une telle forme, et chaque ligne de pliage s'étend transversalement à l'axe longitudinal (20) le long de l'un des deux côtés plats (16, 18).

5. Organe de support (10) conforme à l'une des revendications précédentes, **caractérisé en ce que** le segment de pliage (30, 32) s'amincit en direction de son extrémité libre.

6. Organe de support (10) conforme à l'une des revendications précédentes, **caractérisé en ce que** les deux zones d'extrémité (12, 14) comportent un segment de pliage (30, 32) .

7. Procédé permettant de pousser et de maintenir au moins un segment de boyau sur un organe de support (10) conforme à l'une des revendications précédentes, comprenant les étapes suivantes consistant à:
a. pousser le segment de boyau sur l'organe de support (10), et
b. replier le segment de pliage (30, 32) autour de la première ligne de pliage (34, 36).

8. Procédé permettant de pousser et de maintenir au moins un segment de boyau conforme à la revendication 7, sur un organe de support (10) conforme à l'une des revendications 2 à 6, comprenant en outre une étape consistant à:
c. replier le segment de pliage (30, 32) le long de la seconde ligne de pliage (38, 40).

9. Procédé permettant de pousser et de maintenir au moins un segment de boyau conforme à la revendication 7 ou 8, sur un organe de support (10) conforme à la revendication 6, **caractérisé en ce que** les étapes a. et b. ou a. à c. sont répétées sur l'autre zone d'extrémité libre (12, 14).
